(19) Europäisches Patentamt / European Patent Office / Office européen des brevets

(11) **EP 2 818 824 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
**G01B 11/00** *(2006.01)*    **G06K 9/00** *(2006.01)*
**G06K 9/20** *(2006.01)*    *G06T 7/20 (2006.01)*

(21) Anmeldenummer: **13174250.4**

(22) Anmeldetag: **28.06.2013**

(54) **Vorrichtung umfassend einen optoelektronischen 3D-Sensor und Verfahren zum Erkennen von Objekten**

Apparatus comprising an optoelectronic 3D-sensor and method for recognising objects

Appareil comprenant un capteur optoélectronique 3D et procédé de réconaissance d'objets

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**31.12.2014 Patentblatt 2015/01**

(73) Patentinhaber: **SICK AG**
**79183 Waldkirch (DE)**

(72) Erfinder:
• **MacNamara, Shane**
**79285 Ebringen (DE)**
• **Graf, Jürgen**
**79183 Waldkirch (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
EP-A1- 2 017 571    EP-A1- 2 275 989
EP-A1- 2 439 487    EP-A2- 1 482 238
WO-A1-2007/020666    US-A1- 2011 044 502

**Beschreibung**

Die Erfindung betrifft einen optoelektronischen 3D-Sensor und ein Verfahren zum Erkennen von Objekten innerhalb mindestens eines vorgegebenen Detektionsfeldes nach dem Oberbegriff von Anspruch 1 beziehungsweise 14.

Zu den optoelektronischen 3D-Sensoren zählen zunächst 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese dreidimensionalen Bilddaten werden auch als Tiefenkarte bezeichnet. Weiterhin bekannt sind in zwei oder in allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

Der Begriff 3D-Sensor ist insofern unpräzise, als mit einem optoelektronischen Sensor nur eine Oberfläche erfasst werden kann und die Szene außerdem aus Sicht des Sensors gemäß den Gesetzmäßigkeiten der projektiven Geometrie abgebildet wird. Das ist beispielsweise in der Magnetresonanztomographie anders, wo vollständige und euklidische dreidimensionale Daten erfasst werden. Aus diesem Grund spricht man auch manchmal von einer 2.5D-Abbildung, und eine Tiefenkarte enthält demnach genaugenommen keine dreidimensionalen Bilddaten, sondern ein 2.5D-Entfernungsprofil der Objektoberflächen in der Szenerie. Dieser Unterschied hat erhebliche Auswirkungen, die bei der Auswertung berücksichtigt werden müssen. Denn durch die projektive Aufnahme werden Objektgrößen scheinbar abhängig von der Distanz zu dem Sensor. Zudem gibt es Abschattungen, also Objekte, die sich aus Sicht des Sensors hinter anderen Objekten befinden und deshalb nicht oder nur teilweise erfasst werden.

Die dreidimensionalen Bilddaten dienen vielfältigen Zwecken, wie der Vermessung, der Erkennung von Objektpositionen oder -posen oder der Visualisierung. Ein spezielles Anwendungsfeld ist die Sicherheitstechnik, wo der 3D-Sensor als Schutzeinrichtung eingesetzt wird, um einen als kritisch eingestuften Zustand innerhalb des überwachten Raumes zu erkennen, der dann zu einer Warnung oder einer Absicherung einer Gefahrenquelle führt. Die Sicherheitstechnik stellt besondere Anforderungen, weil von der Funktionsfähigkeit des 3D-Sensors Gesundheit oder gar Leben von Personen abhängt. Hier ergibt sich ein Spannungsfeld aus Sicherheit und Verfügbarkeit: Aus Sicherheifsgründen muss praktisch immer der konservative Weg gewählt und im Zweifel eine Abschaltung veranlasst werden. Andererseits stellt jede Abschaltung eine erhebliche und oft kostenträchtige Störung der Abläufe dar, und der 3D-Sensor ist nur praxistauglich, wenn er eine hohe Verfügbarkeit aufweist, also möglichst selten unnötig in den Absicherungszustand übergeht. Da gerade dreidimensionale Bilddaten oft lückenhaft oder mit großen Messfehlern behaftet sind, stellt eine angemessene Verfügbarkeit vor dem Hintergrund der stets vorrangigen Sicherheit eine erhebliche Herausforderung dar.

Eigentlich würde man sich bei sicherheitstechnischen Anwendungen im Rahmen einer vollständig integrierten Mensch-Maschine-Interaktion eine variable, flexible Schutzhülle um sämtliche Gefährdungsquellen wünschen, wie etwa bewegte mechanische Teile oder Roboter. Solche dynamischen Schutzhüllen erfordern hochkomplexe Bildauswertungen, welche im Betrieb die zulässigen Bewegungen der Maschine von unzulässigen Eingriffen durch Bedienpersonal oder Fehlfunktionen anderer Maschinen zuverlässig unterscheiden können. Derartige Systeme sind aber für die Praxis noch nicht weit genug ausgereift, um in der Sicherheitstechnik erfolgreich eingesetzt werden zu können. Erkennungsfehler bei der Bildauswertung würden die Gesundheit des Bedienpersonals gefährden oder, um dies sicher zu vermeiden, durch gehäufte Fehlalarme zu sehr hohen Ausfallzeiten führen und damit die Verfügbarkeit zu stark beschränken. Daher ist es üblich, Schützfelder vorzukonfigurieren und dann im Betrieb auf unzulässige Objekteingriffe zu überwachen. Dabei schließt ein Vorkonfigurieren nicht aus, dass die Schutzfelder zumindest in gewissen Grenzen während des Betriebs variieren, beispielsweise durch dynamische Auswahl einer bestimmten Konfiguration oder Anpassung der Schutzfelddimensionen in Abhängigkeit des jeweiligen Arbeitsschrittes eines überwachten Roboters.

Die Verallgemeinerung eines Schutzfeldes auch für Anwendungen außerhalb der Sicherheitstechnik, etwa für die Automatisierungstechnik, wird hier als Detektionsfeld bezeichnet. Detektionsfelder sind virtuell definierte, räumliche Teilbereiche des Erfassungsbereichs des 3D-Sensors, also Volumina mit einer dreidimensionalen geometrischen Beschreibung. Üblicherweise werden Detektionsfelder zur Einrichtzeit festgelegt und zur Laufzeit ausgewertet. Die Detektionsfelder legen fest, welche Bereiche der erfassten Szenerie auf Objekte hin auszuwerten sind, wobei sich dies möglicherweise nur jeweils auf einen bestimmten Zeitpunkt bezieht und sich die Definition der Detektionsfelder zu einem anderen Zeitpunkt verändert. Der Typ des Detektionsfeldes legt fest, welche Art der Auswertung vorzunehmen ist und welche Reaktion ein Objekteingriff in ein Detektionsfeld auslöst. Bei den schon angesprochenen Schutzfeldern führt ein Objekteingriff zu einer sicherheitsgerichteten Abschaltung. Warnfelder sind zumeist Schutzfeldern vorgelagert und lösen einen Alarm aus, ohne direkt in das System einzugreifen, und sollen in der Regel durch den Alarm einen weitergehenden Eingriff in ein Schutzfeld noch rechtzeitig verhindern. Automatisierungsfelder sind der allgemeine Komplementärbegriff zu Schutz- und Warnfeldern, also nicht sicherheitsrelevant, sondern werden beispielsweise in Form eines Funktionsfeldes als virtueller Schalter, als Messfeld zu Bestimmung von Volumina oder andere Messungen genutzt. Die Auswertung von Detektionsfeldern für Aufgaben sowohl der Sicherheitstechnik als auch der Automatisierungstechnik durch den gleichen 3D-Sensor ist aus der EP 2 053 538 A1 bekannt.

Es sind beispielsweise in der EP 2 023 160 B1, EP 2 048 557 B1, EP 2 017 571 A1 oder der DE 10 2005 063 217 A1 verschiedene Möglichkeiten beschrieben, Schutzfelder für einen 3D-Sensor zu konfigurieren. Die Herangehensweise ist dabei vielfältig, sei es durch eine Art CAD-Programm, durch an der Gefahrenquelle oder im Überwachungsbereich angebrachte optische Markierungen oder ein Handgerät, mit dem direkt in der Szenerie Grenzen der gewünschten Schutzfelder angegeben werden können. Diese Dokumente befassen sich aber nicht mit der Frage, wie diese euklidisch definierten Schutzfelder dann effizient und sicher auf Objekteingriffe ausgewertet werden können. Dabei wird die eingangs erläuterte Problematik der projektiven und nicht euklidischen Geometrie des 3D-Sensors, also abstandsabhängige Größenverzerrungen und gegenseitige Abschattungen von Objekten durch die Perspektive des 3D-Sensors, gar nicht erst angesprochen.

Die EP 2 275 990 B1 befasst sich mit einem weiteren Problem der Auswertung, nämlich mit Lücken in der Tiefenkarte. Lücken werden von einzelnen oder benachbarten Pixeln der Tiefenkarte gebildet, für welche der 3D-Sensor keine zuverlässige Entfernungsschätzung liefert. Gemäß der EP 2 275 990 B1 wird eine doppelte Prüfung vorgenommen, nämlich ob es kritische Lücken oder zusammenhängende Pixelbereiche ohne Lücken gibt, die jeweils größer sind als das kleinste zu detektierende Objekt. Beides wird als sicherheitskritisch betrachtet. Allerdings wird dabei nicht darauf eingegangen, wie man feststellt, ob der kritische Bereich innerhalb eines Schutzfeldes liegt, und ebenso wenig auf die Größenverzerrungen oder Abschattungen durch die projektive Aufnahme.

Die US 2011/0044502 A1 befasst sich mit Bewegungsdetektion aufgrund von stereoskopisch gewonnenen Tiefenkarten. Die Objekte werden durch Vergleich mit einem zuvor aufgenommenen Hintergrundbild erkannt.

In der WO 2007/020666 A1 werden Muster in die Szenerie projiziert, um Objekte in einem Bild der Szenerie anhand von Veränderungen gegenüber dem bekannten Muster zu erkennen.

Die EP 2 439 487 A1 beschreibt eine Volumenmessvorrichtung mit einem Odometriesensor, der ein dreidimensionales Bild aufnehmen kann.

Aus der EP 1 482 328 A2 ist eine stereoskopische Kamera bekannt, welche die Umgebung einer Maschine auf Bewegungen von Personen überwacht.

Es ist daher Aufgabe der Erfindung, die Auswertung einer Tiefenkarte zum Erkennen von Objekten innerhalb vorgegebener Detektionsfelder zu verbessern.

Diese Aufgabe wird durch einen optoelektronischen 3D-Sensor und ein Verfahren zum Erkennen von Objekten innerhalb mindestens eines vorgegebenen Detektionsfeldes nach Anspruch 1 beziehungsweise 14 gelöst. Mittels einer Konfigurationseinheit sind geometrische Repräsentationen der Detektionsfelder vorgegeben, welche die äußeren Begrenzungsflächen des jeweiligen Detektionsfeldes umfassen oder zumindest deren Bestimmung ermöglichen. Für die Auswertung nimmt ein 3D-Bildsensor, beispielsweise der Aufnahmechip einer 3D-Kamera oder der Lichtempfänger eines Laserscanners, der den wandernden Abtaststrahl registriert, eine pixelaufgelöste Tiefenkarte auf, d. h. ein Bild, welches in seinen Pixeln Abstands-, Entfernungs- oder Tiefenwerte zu Objektstrukturen in der Szenerie hält.

Die Erfindung geht dann von dem Grundgedanken aus, eine Referenztiefenkarte oder kurz Referenzkarte aus den Detektionsfeldern zu erstellen, die unmittelbar mit der Tiefenkarte vergleichbar ist. Die Referenzkarte ist also ebenfalls ein pixelaufgelöstes Bild, dessen Pixel aber Entfernungswerte zu den virtuellen Detektionsfeldern und nicht den tatsächlichen Objekten enthalten. Außerdem sind diese Entfernungen in die projektive Perspektive des 3D-Sensors umgerechnet, d. h. es sind Entfernungen bezüglich des 3D-Bildsensors beziehungsweise bezüglich dessen Empfangsoptik und berücksichtigen damit Größenverzerrungen und Abschattungen.

Die Erfindung hat den Vorteil, dass mit der Referenzkarte eine Grundlage gefunden ist, um ein effizientes Verfahren für die eigentliche Objekterfassung zu ermöglichen. Die Projektivität des 3D-Bildsensors beziehungsweise von dessen Abbildungsoptik wird für die Detektionsfelder in der Referenzkarte berücksichtigt. Damit wird die Auswertung auf Objekteingriffe in Detektionsfelder genauer und dabei noch vereinfacht und beschleunigt.

Vorzugsweise ist in Pixeln der Referenzkarte jeweils der Abstand von dem 3D-Sensor zu einer in der durch das jeweilige Pixel vorgegebenen Richtung befindlichen Feldgrenze eingetragen. Die Referenzkarte sieht also genau aus Wie eine Tiefenkarte einer fiktiven Szenerie, in der sich ausschließlich die Detektionsfelder als geometrische Körper befinden. Pixel entsprechend einem Sichtwinkel, in dem sich kein Detektionsfeld befindet, werden auf einen Initialwert gesetzt, der vorzugsweise unendlich beziehungsweise einer maximalen Reichweite des 3D-Sensors entspricht.

Bei mehreren in der gleichen Richtung hintereinander liegenden Feldgrenzen ist in die Referenzkarte vorzugsweise der Abstand der am weitesten entfernten Feldgrenze eingetragen. Dies gilt vor allem für Sicherheitsanwendungen, in denen ein fehlerhaft erkanntes Objekt nur einen Fehlalarm, ein übersehenes Objekt dagegen ein nicht hinnehmbares Sicherheitsrisiko bedeutet. Näher betrachtet werden müssen dabei alle Objekte, die einen Teil eines Detektionsfeldes abschatten könnten, so dass nur Objekte jenseits der fernsten Feldgrenze ignoriert werden dürfen.

Die Konfigurationseinheit ist bevorzugt dafür ausgebildet, zur Bestimmung des Abstands einen Strahl in die durch das Pixel vorgegebene Richtung zu verfolgen und dessen Schnittpunkt mit aus den Feldgrenzen gebildeten Grenzflächen des Detektionsfeldes zu ermitteln. Dazu werden nochmals bevorzugt die Detektionsfelder in Grenzflächen zerlegt, eine Bodenfläche in maximalem Abstand zu dem 3D-Sensor wird in Rechtecke entsprechend den Pixeln der Referenzkarte unterteilt, und für jedes Pixel wird virtuell ein Strahl in den 3D-Sensor zurückverfolgt. Der Schnittpunkt des Strahls mit einer Grenzfläche bestimmt den für dieses Pixel einzutragenden Abstand.

Die Konfigurationseinheit ist bevorzugt dafür ausgebildet, ein lineares Gleichungssystem für die Schnittpunktbestimmung des Strahls mit der Ebene der Grenzfläche zu lösen und den Abstand des Schnittpunkts nur in die Referenzkarte zu übernehmen, wenn einerseits der Schnittpunkt innerhalb der Grenzfläche liegt und andererseits für diese Richtung in der Referenzkarte nicht bereits ein kleinerer Abstand eingetragen ist. Das lineare Gleichungssystem ist die mathematische Repräsentation des Schnittpunktproblems bei der Strahlrückverfolgung. Dieses Gleichungssystem kann ungültige Lösungen liefern, die zwar in der Ebene der Grenzfläche, nicht aber innerhalb der endlichen Grenzfläche selbst liegen und die aussortiert werden sollten. Außerdem kann ein Strahl mehrere Grenzflächen schneiden, und diese Mehrdeutigkeit wird vorzugsweise ausgeschlossen, indem nur der größte Abstandswert in dem Pixel gespeichert wird.

Die Konfigurationseinheit ist bevorzugt dafür ausgebildet, bei Vorgabe mehrerer Detektionsfelder die Detektionsfelder auf mehrere Referenzkarten zu verteilen, um zu verhindern, dass innerhalb einer Referenzkarte ein Detektionsfeld aus Sicht des 3D-Sensors im Schatten eines anderen Detektionsfelds liegt. Das zuvor erwähnte mögliche Vorgehen, bei Überlappungen von Detektionsfeldern in der Referenzkarte jeweils nur den größten Abstand zu speichern, sorgt zwar auch bei gegenseitig abschattenden Detektionsfeldern für eine sichere Auswertung. Effektiv werden aber dadurch Detektionsfelder miteinander verschmolzen, dabei entgegen der ursprünglichen Konfiguration auch ein Zwischenbereich in das Detektionsfeld eingeschlossen. Um das zu vermeiden, werden mehrere Referenzkarten gebildet, die in dem Sinne entflochten sind, dass solche ungewollten Verbindungen von Detektionsfeldern vermieden sind. Die Bedingung, dass keine Detektionsfelder im Schatten eines anderen Detektionsfeldes liegen, kann natürlich auch bei der Konfiguration erzwungen werden. Das schränkt aber die möglichen Konfigurationen deutlich ein und erfordert jedenfalls große Erfahrung des Benutzers.

Die Konfigurationseinheit ist vorzugsweise dafür ausgebildet, für die Detektionsfelder paarweise festzustellen, ob sie einander abschatten, um einen Graphen zu erzeugen, dessen Knoten die Detektionsfelder sind, die genau dann durch Kanten verbunden sind, wenn sie einander abschatten, und das Färbungsproblem für den Graphen zu lösen, wobei die chromatische Zahl die Anzahl benötigter Referenzkarten ist und die Färbung jedes Knotens das zugehörige Detektionsfeld einer der Referenzkarten zuordnet. Die zusätzlichen Referenzkarten müssen erzeugt, gespeichert und ausgewertet werden und kosten daher Ressourcen. Eine Optimierung für möglichst wenig Referenzkarten dagegen kann zur Einrichtzeit stattfinden und darf daher vergleichsweise aufwändig sein. Mit der genannten Relation zwischen zwei die Knoten des Graphen bildenden Detektionsfeldern, ob sie einander überlappen oder nicht, kann das Optimierungsproblem auf das bekannte Färbungsproblem für Graphen transformiert werden. Natürlich genügt es, den Graphen nur implizit und so weit zu bilden, dass ein bekanntes Lösungsverfahren für das Färbungsproblem mit allen erforderlichen Informationen versorgt wird.

Die Konfigurationseinheit ist bevorzugt dafür ausgebildet, die Detektionsfelder in einer Reihenfolge anzuordnen, eine festgelegte oder offene Anzahl von leeren Referenzkarten zur Verfügung zu stellen und die Detektionsfelder nacheinander einer Referenzkarte zuzuordnen, in der durch das zugeordnete Detektionsfeld keine Abschattungen entsteht. Im vorigen Absatz wurde ein allgemeiner Ansatz mit einem Optimierungsverfahren genannt. Das Färbungsproblem ist zwar lösbar, aber selbst beim Einrichten, also ohne Echtzeitanforderung, nicht unbedingt in vertretbarer Rechenzeit. Deshalb wird vorzugsweise nur eine Heuristik angewandt, die schnell zu einem Ergebnis kommt, das dafür nicht notwendigerweise optimal ist. Ist man auf eine feste Maximalzahl von Referenzkarten festgelegt, führt die Heuristik nicht zwingend zu einer Lösung. Unmittelbar einsichtig ist, dass man stets mit so vielen Referenzkarten auskommt, wie Detektionsfelder konfiguriert werden, und dass die Heuristik in aller Regel zumindest einige dieser Referenzkarten einspart.

Die Konfigurationseinheit lässt bevorzugt die Festlegung eines Detektionsfeldes nur mit einer Mindestgröße und/oder nur dann zu, wenn sich zumindest die senkrechten Projektionen der Detektionsfelder nicht überschneiden. Auf diese Weise wird in die Heuristik eine Randbedingung eingeführt, die sicherstellt, dass schon eine geringe Anzahl von Referenzkarten ausreicht. Die genannte Mindestgröße bezieht sich vorzugsweise auf eine Projektion oder die Grundfläche eines Detektionsfeldes, da dies für die Abschattung maßgeblich ist. Die zweite Bedingung bedeutet, dass Detektionsfelder nicht im euklidischen Raum gestapelt werden dürfen. Das ist eine viel schwächere Bedingung als das Verbot des Stapelns im projektiven Raum, welches ja gerade die gesuchte Eigenschaft für jede einzelne Referenzkarte ist. Die beiden Bedingungen begrenzen die Maximalanzahl einer Gruppe von Detektionsfelder, die sich allesamt gegenseitig abschatten, und somit gleichzeitig die Maximalanzahl erforderlicher Referenzkarten auch bei einem heuristischen und nicht optimierten Herangehen.

Die Detektionsfelder können vorzugsweise nur innerhalb eines Arbeitsvolumens festgelegt werden, das zwischen einer Deckenebene in einem Mindestabstand und einer Bodenebene in einem Höchstabstand zu dem 3D-Sensor liegt, und wobei die Mindestgröße und die Anzahl Referenzkarten anhand eines Vergleichs ihres Produkts mit einer Referenzlänge vorgegeben ist, die sich wie folgt bestimmt:

- Projiziere als ersten Messpunkt einen bei maximalem Sichtwinkel des 3D-Sensors gelegenen Randpunkt der Deckenebene senkrecht auf die Bodenebene
- Projiziere den ersten Messpunkt auf einem Strahl zu dem 3D-Sensor zurück auf die Deckenebene
- Projiziere den neuerlich auf der Deckenebene erhaltenen Punkt als zweiten Messpunkt wieder senkrecht auf die Bodenebene
- Bestimme die Referenzlänge als Betragsdifferenz zwischen dem ersten Messpunkt und dem zweiten Messpunkt.

Das genannte Szenario eines Arbeitsvolumens mit Decken- und Bodenfläche stellt nicht nur zur Abschätzung einer Mindestgröße von Detektionsfeldern eine vorteilhafte Anwendung des 3D-Sensors dar. Der Quotient der mit diesem Vorgehen bestimmten Referenzlänge und der Anzahl verfügbarer Referenzkarten entspricht der Mindestgröße. Somit kann aus der Referenzlänge bei einer vorgegebenen Anzahl Referenzkarten die Mindestgröße abgeleitet werden und umgekehrt. Praktisch wird dies beispielsweise genutzt, indem die Anzahl der Referenzkarten in der Konfigurationseinheit parametrieren werden kann und diese dann nur noch Detektionsfelder in der Mindestgröße konfigurieren lässt oder umgekehrt.

Die Objekterkennungseinheit ist dafür ausgebildet eine Differenzkarte als pixelweise Differenz von Tiefenkarte und Referenzkarte zu bilden und die Differenzkarte auszuwerten, um Objekteingriffe in das Detektionsfeld zu erkennen. Die Differenzkarte zeigt an, wo sich bezüglich eines Pixels oder festen Beobachtungswinkels eine Struktur der Szenerie näher an der Kamera befindet als ein Detektionsfeld. Genau an solchen Stellen liegt also ein Teil eines Objekts in einem Detektionsfeld oder schattet das Detektionsfeld ab, was zumindest in Sicherheitsanwendungen gleichwertig behandelt wird. Sofern mehrere Referenzkarten für die Auswertung mehrerer Detektionsfelder gebildet wurden, werden auch sequentiell oder parallel mehrere Differenzkarten erzeugt und ausgewertet.

Die Objekterkennungseinheit ist bevorzugt dafür ausgebildet, die Differenzkarte als pixelaufgelöste Binärkarte zu erzeugen, die in ihren Pixeln lediglich das Vorzeichen der Abstandswerte der Differenzkarte enthält. Eine derartige Binärkarte benötigt weniger Speicher, ist schneller auswertbar und enthält dennoch alle relevanten Informationen. Das Vorzeichen wird beispielsweise mit Eins codiert, wenn die Tiefenkarte den kleineren Wert enthält als die Referenzkarte. Dies sind die für die Objekterkennung kritischen Pixel, in denen eine Objektstruktur in einem Detektionsfeld liegt oder dieses abschattet.

Die Objekterkennungseinheit ist bevorzugt dafür ausgebildet, nur Regionen der Differenzkarte auf Objekteingriffe auszuwerten, wo das Vorzeichen ein Objekt in oder vor einem Detektionsfeld codiert. Dies sind nach der soeben eingeführten Konvention die Pixel mit dem Wert Eins. Es kann nicht zwingend von jedem Pixel mit dem Wert Eins auf einen Objekteingriff geschlossen werden, da es sich immer noch beispielsweise um eine Störung, ein erlaubtes oder ein zu kleines, nicht sicherheitskritisches Objekt handeln könnte. Um dies zu entscheiden, ist eine Auswertung bei den Pixeln mit Wert Eins erforderlich. Bei Pixeln mit dem Wert Null dagegen gibt es keine Objekte in Detektionsfeldern, so dass diese Pixel auch nicht weiter geprüft werden müssen. Dies beschleunigt die Auswertung erheblich, zumal gerade in Sicherheitsanwendungen die meisten Pixel den Wert Null enthalten. Gerade bei Entflechtung in mehrere Referenzkarten sind in vielen Regionen gar keine Schutzfelder vorgesehen. Und auch in Bereichen mit Schutzfeldern befinden sich der Wahrscheinlichkeit nach keine großen Objekte, weil diese im vorangegangenen Frame eine sicherheitsgerichtete Abschaltung ausgelöst hätten. Es gibt folglich fast immer nur verhältnismäßig wenige Pixel mit dem Wert Eins.

Vorzugsweise ist ein sicherer Ausgang vorgesehen, über welchen durch die Objekterkennungseinheit ein sicherheitsgerichtetes Abschaltsignal an eine überwachte Gefahrenquelle ausgebbar ist, sobald ein unzulässiger Objekteingriff in ein als Schutzfeld ausgebildetes Detektionsfeld erkannt ist. Wie soeben erläutert, ist nicht jeglicher Objekteingriff automatisch sicherheitskritisch. Beispielsweise werden Objekteingriffe zugelassen, die nur kleine Bereiche betreffen, die nur von sehr kurzer Dauer sind oder die sich nach sonstigen Eigenschaften wie Kontur, Größe, Position, Bewegungsrichtung oder Geschwindigkeit des Eingriff einem erlaubten Objekt zuordnen lassen. Für Diagnosezwecke oder ein erleichtertes Wiederanfahren kann mit dem sicherheitsgerichteten Abschaltsignal auch angegeben werden, welches Schutzfeld die Absicherung ausgelöst hat, oder auch eine Tiefenkarte mit der Position des auslösenden Objekts angezeigt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische räumliche Gesamtdarstellung eines 3D-Sensors;

Fig. 2    eine beispielhafte Darstellung einer Referenzkarte mit einem Detektionsfeld;

Fig. 3    eine schematische Darstellung einer Grenzfläche eines Detektionsfeldes und eines Sichtstrahls des 3D-Sensors zur Erläuterung der Berechnung einer Referenzkarte;

Fig. 4    ein Beispiel einer Überlagerung einer Tiefenkarte mit der Referenzkarte gemäß Figur 2;

Fig. 5    eine aus der Referenzkarte der Figur 1 und der Tiefenkarte der Figur 4 gebildete Differenzkarte; und

Fig. 6    eine erläuternde Skizze zur Berechnung einer Mindestgröße von Detektionsfeldern, mit welcher die Erzeugung von abschattungsfreien Referenzkarten sichergestellt werden kann.

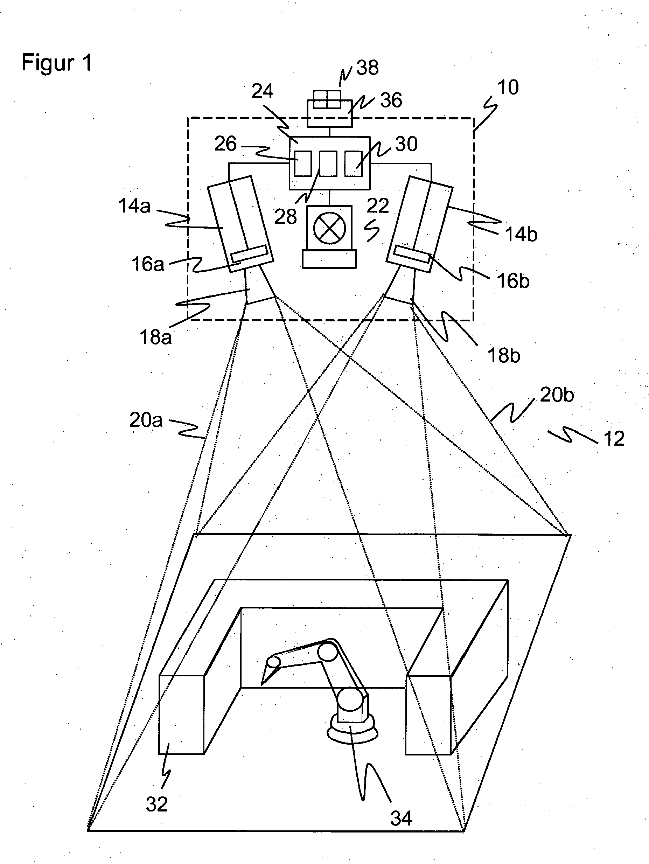

Figur 1 zeigt in einer schematischen dreidimensionalen Darstellung den allgemeinen Aufbau eines 3D-Sensors 10 zur Aufnahme einer Tiefenkarte eines Raumbereichs 12. Der dargestellte und im Folgenden beschriebene 3D-Sensor 10 ist eine Stereokamera. Die Erfindung ist aber darauf nicht beschränkt, sondern umfasst ebenso andere optoelektronische 3D-Sensoren, insbesondere die einleitend genannten anderen 3D-Kameras mit Bestimmung der Lichtlaufzeit oder einer Auswertung der Störung passiver zweidimensionaler Muster oder von projizierten Beleuchtungsmustern sowie Laserscanner. Der 3D-Sensor 10 ist für eine Aufnahme von oben montiert, was oft vorteilhaft ist und auch an manchen Stellen in dieser Beschreibung die Sprache der geometrischen Beziehungen prägt. Dennoch kann der 3D-Sensor 10 ebenso seitlich, unten oder in beliebiger sonstiger statischer oder mobiler Position und Orientierung angebracht sein.

Zwei Kameramodule 14a, 14b sind in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welches in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise einem externen Standardcomputer, internen digitalen Bausteinen wie Mikroprozessoren, ASICs (Application Specific Integrated Circuit) oder FPGAs (Field Programmable Gate Array) oder Mischformen davon. Da das Erzeugen der Tiefenkarte und deren Auswertung sehr rechenintensiv ist, wird vorzugsweise eine zumindest teilweise parallele Architektur gebildet.

Die Steuer- und Auswertungseinheit 24 umfasst unter anderem eine Stereoskopieeinheit 26, eine Konfigurationseinheit 28 und eine Objekterkennungseinheit 30. Sie erzeugt außerdem mit Hilfe der Beleuchtungseinheit 22 das strukturierte Beleuchtungsmuster und empfängt Bilddaten der Bildsensoren 16a, 16b. Aus diesen Bilddaten berechnet die Stereoskopieeinheit 26 mit Hilfe einer stereoskopischen Disparitätsschätzung die dreidimensionale Bilddaten beziehungsweise die Tiefenkarte des Raumbereichs 12.

Mit Hilfe der Konfigurationseinheit 28 sind in dem Raumbereich 12 virtuelle Detektionsfelder 32 festgelegt, die dabei helfen, die Szenerie zu segmentieren. Wie die gesamte Steuer- und Auswertungseinheit 24 kann auch die Konfigurationseinheit 28 extern implementiert und innerhalb des 3D-Sensors 10 lediglich eine rudimentäre Konfigurationseinheit 28 mit einem Speicher und einer Schnittstelle zum Empfangen und Ablegen der geometrischen Repräsentationen der konfigurierten Detektionsfelder 32 vorgesehen sein. Die Detektionsfelder 32 bilden als Schutzfelder eine virtuelle Wand, um eine hier als Roboterarm 34 dargestellte Gefahrenquelle gegenüber unerlaubten Objekteingriffen abzusichern. Alternativ handelt es sich um Warnfelder oder um Detektionsfelder für nicht sicherheitsrelevante Auswertungen wie Messfelder.

Die Objekterkennungseinheit 30 wertet, häufig in Echtzeit, die Tiefenkarte auf Objekteingriffe in die Detektionsfelder 32 aus. Dies wird weiter unten näher erläutert. Im Falle eines als Warn- oder Schutzfeld definierten Detektionsfeldes 32 löst ein Objekteingriff über eine Warn- oder Abschalteinrichtung 36, die wiederum in die Steuerung 24 integriert sein kann, ein Warnsignal oder ein sicherheitsgerichtetes Abschaltsignal aus, welches über einen sicheren Ausgang 38 (OSSD, Output Signal Switching Device) ausgegeben wird, um beispielsweise den Roboterarm 34 abzusichern oder anzuhalten.

In einer bevorzugten Ausführungsform ist der 3D-Sensor 10 für sicherheitstechnische Anwendungen fehlersicher ausgelegt. Dies kann unter anderem bedeuten, dass der 3D-Sensor 10 sich selber, auch in Zyklen unterhalb der geforderten Ansprechzeit, testen kann, Defekte der Bildsensoren 16a-b oder der Beleuchtungseinheit 22 erkennt, oder dass die Steuerung 24, die Warnoder Abschalteinrichtung 36 und/öder der Ausgang 38 sicher, beispielsweise zweikanalig ausgelegt sind, beziehungsweise selbstprüfende Algorithmen verwenden. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

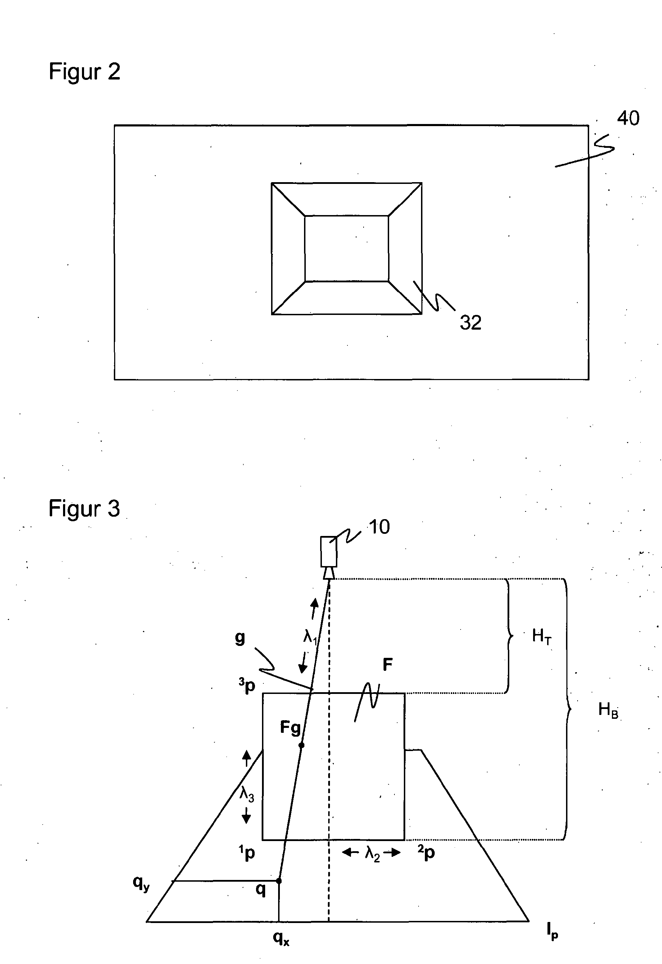

Figur 2 zeigt ein Beispiel einer sogenannten Referenzkarte 40, die zur Vorbereitung der eigentlichen Auswertung in der Objekterkennungseinheit 30 aus den Detektionsfeldern 32 berechnet wird. Die Referenzkarte 40 entsteht aus geometrischen Definitionen der Detektionsfelder 32, die aber bereits in die projektive Perspektive des 3D-Sensors 10 umgerechnet sind. Bei dem in Figur 2 gezeigten, quaderförmigen Detektionsfeld 32 "fallen" deshalb die Seitenflächen nach außen. Die Referenzkarte 40 entspricht vorzugsweise in ihrer Auflösung in X- und Y-Richtung sowie in ihrem Bildausschnitt der Tiefenkarte und enthält in jedem Pixel den Abstand zu dem entsprechenden Punkt des Detektionsfeldes 32. Bei Mehrdeutigkeiten ist gerade für sicherheitstechnische Auswertungen der Punkt eines Detektionsfeldes 32 mit größtem Abstand eingetragen. Im Unterschied zu den ursprünglichen geometrischen Definitionen des Detektionsfeldes 32 kann die Referenzkarte 40 unmittelbar mit der Tiefenkarte verglichen werden. Im Prinzip ist die Referenzkarte 40 nämlich selbst eine Tiefenkarte einer virtuellen Szenerie, in der sich die Detektionsfelder 32 als geometrische Objekte befinden. Die Berechnung der Referenzkarte aus den Detektionsfeldern 32 erfolgt vorzugsweise schon zur Einrichtzeit und erfordert damit keine Rechenkapazitäten während der Auswertung.

Die Detektionsfelder 32 selbst werden in einem Konfigurationsmodus durch einen Benutzer oder Einrichter vorgegeben. Dazu verwendet der Einrichter eine Mensch-Maschine-Schnittstelle, die ihm Werkzeuge zur Positionierung und Dimensionierung von Detektionsfeldern 32 zur Verfügung stellt. Andere bekannte Möglichkeiten zur Festlegung der Detektionsfelder 32 sind einleitend genannt. Auf die konkrete Art der Eingabe von Detektionsfeldern 32 kommt es für die Erfindung nicht an. Jedenfalls entsteht als Ergebnis eine interne Repräsentation der Detektionsfelder 32, die in der Konfigurationseinheit 28 abgelegt ist. Zusätzlich zu der Geometrie der Detektionsfelder 32 wird auch deren Typ oder Funktion festgelegt, also ob es sich jeweils um ein Schutzfeld oder Warnfeld für sicherheitstechnische Zwecke oder ein Messfeld für eine Automatisierungsfunktion handelt.

Obwohl dies keine zwingende Voraussetzung für die Erfindung ist, werden die Detektionsfelder 32 üblicherweise euklidisch vorgegeben. Dies entspricht der intuitiven Denkweise des Benutzers bei der Planung und Einteilung des Arbeitsbereichs. Die projektive Perspektive des 3D-Sensors 10 dagegen ist unintuitiv und allenfalls spezialisierten Benutzern zugänglich. Eine Möglichkeit der Konfiguration besteht darin, in einem Einrichtprogramm einen zweidimensionalen Polygonzug als senkrecht zu der optischen Achse des 3D-Sensors 10 stehende Grundebene eines Detektionsfeldes einzuzeichnen sowie eine zugehörige Höhe vorzugeben. Eine interne Repräsentation der Geometrie eines solchen verallgemeinerten Zylinders kann dann aus den Eckpunkten des Polygonzuges sowie einer Höheninformation bestehen. Zur Auswertung lassen sich derartige Zylinder in einem Unterteilungsverfahren in die Grundfläche, die Deckelfläche sowie jeweils viereckige Abschnitte der Mantelfläche zerlegen.

Eine Beschränkung auf verallgemeinerte Zylinder erleichtert den Einstieg in die Konfiguration, ist aber technisch nicht notwendig. Beispielsweise können Grundfläche und Deckelfläche des Zylinders beliebig geformte Oberflächen haben, oder die Verbindung zwischen zwei Eckpunkten eines Polygonzugs wird durch gekrümmte Linien wie Splines angegeben. Man kann sich auch ganz von Zylindern lösen, beliebige dreidimensionale Körper als Detektionsfelder 32 zulassen und diese durch geeignete Repräsentationen erfassen, wie Mittelpunkt und Radius bei einer Kurve, oder in bekannte Weise deren Außenflächen durch ein Polygonnetz approximieren.

Figur 3 erläutert ein beispielhaftes Verfahren, wie die Referenzkarte 40 aus einer geometrischen Repräsentation der Detektionsfelder 32 berechnet wird. Dazu wird die Referenzkarte 40, die entsprechend einer Tiefenkarte dimensioniert ist, in allen ihren Bildpunkten oder Pixeln $q$ zunächst vorzugsweise auf einen geeigneten Anfangswert initialisiert. Anschließend wird in einer Strahlrückverfolgung für jedes Pixel $q$ eine räumlich verlaufende Gerade $g$ zu einem Nullpunkt an dem 3D-Sensor 10 gezogen und geprüft, welche Grenzflächen $F$ eines Detektionsfeldes 32 geschnitten werden. Der Nullpunkt ergibt sich als Durchstoßpunkt der optischen Achse des 3D-Sensors 10 durch die Abbildungsebene. Figur 3 zeigt der Übersicht halber nur eine einzige Grenzfläche $F$.

Kommt es zu einem Schnitt $Fg$, wird dessen Höhenwert in dem entsprechenden Pixel $q$ der Referenzkarte 40 übernommen. Ansonsten wird eine Null zurückgeschrieben, um anzuzeigen, dass in diesem Sichtwinkel keine Detektionsfelder 32 liegen. Insbesondere wenn mehrere Detektionsfelder 32 einer einzelnen Referenzkarte 40 zugewiesen sind, können sich auch mehrere Schnittpunkte $Fg$ mit unterschiedlichen Grenzflächen $F$ ergeben, so dass mehrere Höhenwerte in ein und demselben Pixel $q$ abgespeichert werden müssten. In solchen Fällen muss in Abhängigkeit der zugrundeliegenden Anwendung eine Vorgehensweise definiert werden. In Applikationen bei denen die Sicherheit durch Gefährdung von Maschinen im Mittelpunkt steht, sollte beispielsweise der jeweils größte Abstand abgespeichert werden, und die anderen Werte werden in diesem Fall verworfen.

Eine beispielhafte konkrete Berechnungsmöglichkeit für den Schnittpunkt **Fg** wird im Folgenden angegeben, wobei die verwendeten Variablen in Figur 3 illustriert sind. Es wird hierbei vorausgesetzt, dass das Detektionsfeld 32 durch einen verallgemeinerten Zylinder mit einem Polygonzug als Grundfläche definiert ist. Diese Beschränkung dient allein der einfachen Darstellung einer Berechnung und bedeutet nicht, dass die Erfindung darauf beschränkt ist, denn entsprechende Methoden der linearen Algebra sind auch für beliebige Grenzflächen anwendbar.

Seien nun $f$ die Brennweite des Empfangsobjektivs des 3D-Sensors sowie $(ppx\ ppy)^T \in Z_{[0,Re\ sX]} \times Z_{[0,Re\ sY]}$ der Nullpunkt am Durchstoßpunkt der optischen Achse durch die Abbildungsebene des 3D-Sensors 10. Des Weiteren sind durch $^1b$, $^2b \in Z_{[0,Re\ sX]} \times Z_{[0,Re\ sY]}$ zwei benachbarte Eckpunkte des Polygonzuges angegeben, der das Detektionsfeld 32 definiert, und zwar in Höhe $H_B$ der Grundfläche des Detektionsfeldes gegenüber der Abbildungsebene des 3D-Sensors 10. Die entsprechende Höhe der Deckelfläche des Detektionsfeldes ist $H_T$.

Gesucht sind die Szenekoordinaten $^ip$ mit $i \in \{1,2,3\}$ .Bestimme daraus zunächst

$$^i\mathbf{p}_x = \left(^i\mathbf{b}_x - ppx\right) \cdot \frac{\mathbf{H}_B}{f} \text{, für } i \in \{1,2\}$$

und

$$^3\mathbf{p}_x = {}^1\mathbf{p}_x \cdot \frac{f}{\mathbf{H}_T} = \left(^1\mathbf{b}_x - ppx\right) \cdot \frac{\mathbf{H}_B}{\mathbf{H}_T}.$$

Die Vektorkomponente $p_y$ wird analog bestimmt.

Ferner ist $^i\mathbf{p}_z = \begin{cases} \mathbf{H}_B & \text{, für } i \in \{1,2\} \\ \mathbf{H}_T & \text{, für } i = 3 \end{cases}$ .

Daraus lässt sich dann das lineare Gleichungssystem

$$\lambda_1\mathbf{q} - \lambda_2\left(^3\mathbf{p} - {}^1\mathbf{p}\right) - \lambda_3\left(^2\mathbf{p} - {}^1\mathbf{p}\right) = {}^1\mathbf{p}.$$

oder kompakt geschrieben

$$\underbrace{\left[\mathbf{q} \quad ^1\mathbf{p} + {}^3\mathbf{p} \quad ^1\mathbf{p} + {}^2\mathbf{p}\right]}_{=:A} \cdot \underbrace{\left(\lambda_1 \quad \lambda_2 \quad \lambda_3\right)^T}_{=:x} = \underbrace{^1\mathbf{p}}_{=:b}$$

formulieren.

Die Matrix **A** ist aufgrund der Konstruktion nichtsingulär und das Gleichungssystem damit immer durch

$\mathbf{x} = \mathbf{A}^{-1} \cdot \mathbf{b}$ lösbar. Zu prüfen ist aber noch, ob der aufgefundene Schnittpunkt tatsächlich innerhalb der durch $^i\mathbf{q}$ mit $i \in \{1,23\}$ definierten Grenzfläche **F** liegt, nämlich genau dann, wenn $\forall\lambda_i \in [0,1]$ mit $i \in \{1,2,3\}$ gilt. Ist dies der Fall, wird in der Referenzkarte 40 an der Bildkoordinate $\{^1\mathbf{q}, {}^2\mathbf{q}\}$ der Tiefenwert $^3\mathbf{x}$ zurückgeschrieben. Falls nicht, wird der Wert $\mathbf{H}_B$ eingetragen. Außerdem kann für **q** bereits ein Höhenwert von einer anderen Grenzfläche **F** eingetragen sein. Dann findet zunächst ein Vergleich zwischen dem vorhandenen und dem neu berechneten Wert statt, und es wird beispielsweise für sicherheitstechnische Anwendungen nur der größte Abstandswert behalten.

Die dargestellte Berechnung kann zur Einrichtzeit stattfinden und belastet dann die Rechenkapazitäten zur Laufzeit nicht, wo die Referenzkarten 40 der Objekterkennungseinheit 30 bereits zur Verfügung stehen. Damit wird der Aufwand verringert, um zur Laufzeit anhand der jeweils erfassten Tiefenkarte das Segmentierungsproblem zu lösen, ob sich ein Tiefenwert innerhalb eines Detektionsfeldes 32 befindet oder nicht.

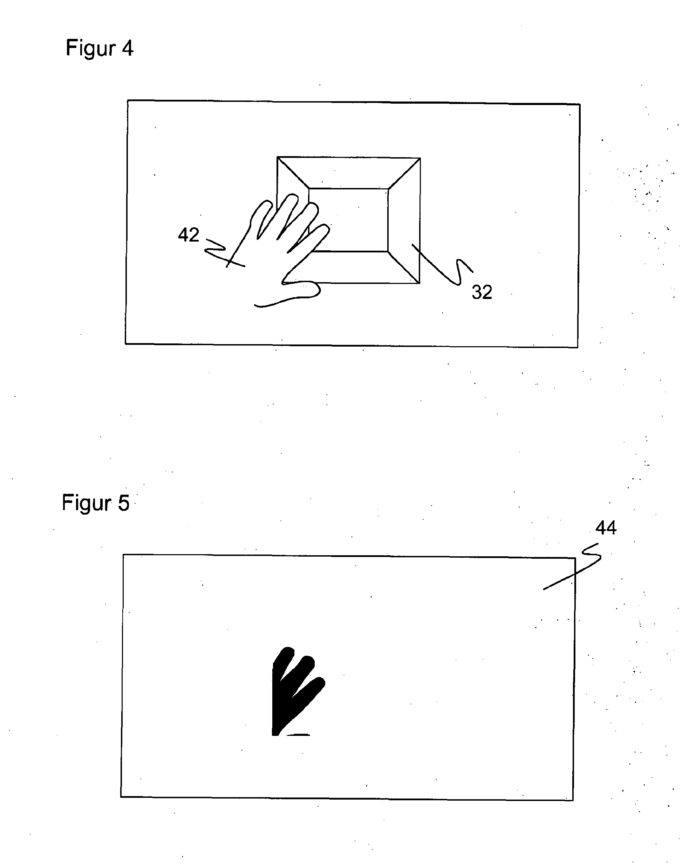

Diese Aufgabenstellung für die Objekterkennungseinheit 30 ist in Figur 4 illustriert, in der ein Detektionsfeld 32 von einem Objekt 42 der Tiefenkarte überlagert ist. Diese Überlagerung dient vor allem dem Verständnis und stellt keinen zwingend erforderlichen Auswertungsschritt dar. Man erkennt mit dem Auge, dass ein Teil des Objekts 42 das Detektionsfeld 32 überlagert, ein anderer Teil nicht. Ohne Tiefenwerte ist allerdings nicht erkennbar, ob das Objekt 42 in Tiefenrichtung in das Detektionsfeld 32 eingreift oder es abschattet.

Figur 5 zeigt eine Differenzkarte, die durch pixelweise Differenz zwischen den Abstandswerten der auszuwertenden Tiefenkarte und der vorab berechneten Referenzkarte entsteht. Statt die Differenzen selbst zu speichern, was in einer alternativen Ausführungsform möglich ist, wird lediglich das Vorzeichen als 1-Bit-Wert gespeichert, wodurch eine Binärkarte 44 entsteht. Zu deren Berechnung wird von dem aktuellen Tiefenbild die zu mindestens einem Detektionsfeld 32 gehörige Referenzkarte 40 subtrahiert. Ein positives Vorzeichen dieser Differenz klassifiziert die für die Auswertung relevanten Informationen, die in Figur 5 als schwarze Pixel gezeigt sind. Es bedeutet nämlich, dass sich in dem jeweiligen Pixel eine Objektstruktur 42 der Tiefenkarte in einem Detektionsfeld 32 befindet oder eine Abschattung erzeugt, welche das Detektionsfeld 32 durchdringt. Aus sicherheitsrelevanten Gesichtspunkten müssen derartig verdeckte Bereiche bei einem sicherheitsgerichteten 3D-Sensor 10 mitberücksichtigt werden. Ein negatives Vorzeichen dagegen steht für Hintergrund, der als weißer oder leerer Bereich verbleibt und für die Auswertung auf Objekteingriffe in Detektionsfelder 32 keine Rolle spielt.

Die Werte der Referenzkarte 40 in Sichtwinkeln, in denen kein Detektionsfeld 32 liegt, sollten bei der Erstellung der Referenzkarte 40 geeignet initialisiert oder gesetzt sein, damit sich unabhängig von dem zugehörigen Wert der Tiefenkarte immer ein negatives Vorzeichen ergibt. In solchen Pixeln kann kein relevanter Objekteingriff vorliegen, da es in dieser Richtung gar kein Detektionsfeld 32 gibt.

Wie einleitend beschrieben, sind Tiefenkarten meist nicht vollständig, sondern weisen Lücken oder Pixel mit unzuverlässigen Abstandswerten auf. Solche Lücken werden aus Sicherheitsgründen vorzugsweise wie eine Objektstruktur direkt an der Empfangsoptik behandelt und dafür Pixel in Lücken auf den Abstand Null gesetzt. Damit erübrigt sich eine Fallunterscheidung zur besonderen Behandlung von Lücken in der nachgelagerten Auswertung.

Schwarze Pixel in der in Figur 5 gezeigten Binärkarte bedeuten demnach Objekte 42 in Detektionsfeldern 32 oder Abschattungen, welche ein Detektionsfeld betreffen. Selbst wenn das Ziel der Auswertung die binäre Feststellung von Schutzfeldeingriffen ist, erschöpft sich die Auswertung aber noch nicht unbedingt darin, die bloße Existenz mindestens eines schwarzen Pixels festzustellen. Das wäre äußerst störanfällig mit der Folge keiner oder sehr geringer Verfügbarkeit des 3D-Sensors 10. Stattdessen können weitere Auswertungen stattfinden, etwa ob die schwarzen Pixel überhaupt den Eingriff eines Objekts von sicherheitsrelevanter Größe zulassen, ob es sich um eine kurzzeitige Störung handelt oder dergleichen. Solche Auswertungen sind durch die Binärkarte 44 erheblich vereinfacht, weil nur noch die Bereiche schwarzer Pixel zu prüfen sind.

Bisher wurde die stillschweigende Annahme getroffen, dass sich alle Detektionsfelder 32 mit einer einzigen Referenzkarte 40 auswerten lassen. Da die Referenzkarte 40 letztlich nur Pixel in X- und Y-Richtung enthält, die Detektionsfelder 32 aber echt dreidimensional definiert sind, ist eine verlustfreie Repräsentation aller Detektionsfelder 32 in einer einzigen Referenzkarte 40 allgemein nicht möglich.

Als Ausweg können mehrere Referenzkarten 40 mit jeweils einer Untermenge der Detektionsfelder 32 gebildet und in der Objekterkennungseinheit 30 nacheinander oder parallel zueinander ausgewertet werden. Dazu sind die Detektionsfelder 32 in geeigneter Weise auf Referenzkarten 40 zu verteilen, so dass sich in der jeweiligen Referenzkarte 40 durch die Projektion keine unauflösbaren Konflikte mehr ergeben.

Es können sich in der Projektion Grenzflächen wechselseitig überlappen, die zu ein und demselben Detektionsfeld 32 gehören. Dies ist durch Verwendung des jeweils größten Abstandswertes bei der Berechnung der Referenzkarte 40 auflösbar. Verdecken sich aber Grenzflächen unterschiedlicher Detektionsfelder 32, so führt dieses Vorgehen letztlich zu einem auswertungsseitigen Verschmelzen der einander verdeckenden Detektionsfelder 32. Die Auswertung entspricht dann nicht mehr der gewünschten Konfiguration und ist im Falle einer sicherheitstechnischen Überwachung überempfindlich, weil auch Eingriffe in den Zwischenbereich zwischen zwei einander abschattende Detektionsfelder in einer sicherheitsgerichteten Abschaltung resultieren.

Derartige Konflikte lassen sich natürlich mit einer großen Anzahl Referenzkarten 40 vermeiden, etwa einer Referenzkarte 40 je Detektionsfeld 32. Allerdings verbraucht jede Referenzkarte 40 Ressourcen in Form von Speicher, Rechenzeit und Datendurchsatz und erhöht die Komplexität des Systems. Daher ist wünschenswert, mit so wenig Referenzkarten 40 auszukommen wie möglich.

Um das Optimierungsproblem formal zu stellen, wird auf die Graphentheorie zurückgegriffen. Dabei sind die Knoten des Graphen die Detektionsfelder 32, und die Kanten werden durch die binäre Relation "überlappt projektiv mit" gebildet. Dabei "überlappt" ein Detektionsfeld 32 genau dann "projektiv mit" einem anderen, wenn es einen von dem 3D-Sensor ausgehenden Strahl gibt, der beide Detektionsfelder schneidet. In dem Graphen entstehen dann möglicherweise mehrere Cluster, die unkritisch sind, weil die Cluster wechselseitig nicht "projektiv überlappen" und daher beliebig einer Referenzkarte 40 zugeordnet werden können.

Innerhalb eines Clusters entspricht das Zuordnungsproblem dem bekannten Graphen-Färbungsproblem, so dass für das Auffinden einer optimalen Verteilung auf Referenzkarten bekannte Methoden der Graphentheorie herangezogen werden können. Dabei muss natürlich der Graph nicht explizit gebildet werden, sondern es wird nur ein Algorithmus mit Anleihen aus der Graphentheorie genutzt. Die Lösung des Färbungsproblems umfasst eine Mindestanzahl benötigter Farben, die sogenannte chromatische Zahl. Die chromatische Zahl gibt also die Anzahl erforderlicher Referenzkarten an, während die jeweilige Knotenfarbe der Lösung des Färbungsproblems ein Detektionsfeld 32 einer Referenzkarte 40 zuordnet.

Das Graphen-Färbungsproblem ist NP-hart, d.h. es existiert kein allgemeiner Ansatz einer effizienten Lösung ohne exponentiellen Aufwand. Die damit letztlich in ihrer Effizienz mit Brute-Force-Methoden vergleichbaren Lösungen können daher schon bei einer vergleichsweise geringen Anzahl von Detektionsfeldern 32 eine nicht mehr handhabbare Berechnungsdauer erfordern, insbesondere bei Ressourcenbeschränkung durch die Rechenkapazitäten eines in den 3D-Sensor 10 eingebetteten Systems. Andererseits kann die Berechnung von Referenzkarten 40 zur Einrichtzeit und sogar im Verbund mit einem externen Rechner erfolgen. Zumindest bis zu einer gewissen Anzahl von Detektionsfeldern 32 ist es deshalb möglich, mit der optimalen Anzahl von Referenzkarten 40 auszukommen.

Eine Alternative zu dem optimalen Ansatz besteht in einer Heuristik, die zwar keine optimale, aber eine gute Lösung auffindet. Außerdem besteht die Möglichkeit, bei der Konfiguration von Detektionsfeldern 32 Randbedingungen zu sichern, welche die Heuristik unterstützen und insbesondere das Auffinden einer Lösung garantieren.

Für eine Ausführungsform einer solchen Heuristik zum Entflechten von Referenzkarten 40 werden die Detektionsfelder 32 zunächst angeordnet, etwa dem Bildaufbau folgend von links oben nach rechts unten und, wo dies noch Mehrdeutigkeiten lässt, von oben nach unten. Anschließend werden die Detektionsfelder 32 ihrer Ordnung nach abgearbeitet, indem das jeweilige Detektionsfeld 32 der nächsten Referenzkarte 40 zugeordnet wird, in der sich keine projektive Überlappung ergibt. Dazu wird erforderlichenfalls jeweils eine weitere Referenzkarte 40 hinzugefügt. Gibt man die Maximalanzahl von Referenzkarten 40 fest vor, so muss das Verfahren unter Umständen mit einer Fehlermeldung abgebrochen werden, weil nicht alle Detektionsfelder 32 untergebracht werden.

Eine nur durch die Anzahl der Detektionsfelder 32 begrenzte offene Anzahl benötigter Referenzkarten 40 ist in der Praxis ebenso wenig erwünscht wie eine Fehlermeldung, die eine bereits gewählte Konfiguration von Detektionsfeldern 32 verbietet. Deshalb ist in einer bevorzugten Ausführungsform vorgesehen, die erfolgreiche Verteilung der Detektionsfelder 32 auf eine festgelegte Anzahl Referenzkarten 40 durch einfache Randbedingungen zu garantieren, die unauflösbare Konflikte systematisch ausschließen. Die Randbedingungen geben einerseits eine untere Schranke für die Größe von Detektionsfeldern 32. Außerdem dürfen Detektionsfelder 32 nicht im euklidischen Raum gestapelt werden, d. h. die senkrecht projizierten Grundflächen der Detektionsfelder 32, nicht jedoch deren Seitenflächen, müssen überschneidungsfrei bleiben.

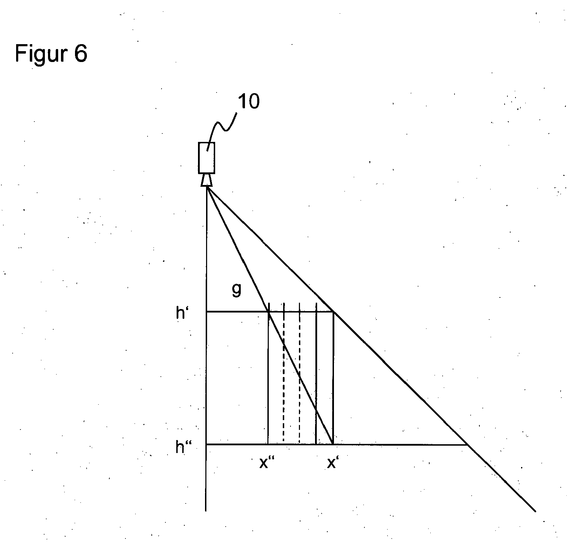

Figur 6 illustriert eine Relation zwischen der erforderlichen Mindestgröße von Detektionsfeldern 32 und der Anzahl von Referenzkarten 40, mit denen bei dieser Mindestgröße stets eine überlappungsfreie Verteilung der Detektionsfelder 32 auf die Referenzkarten 40 möglich ist.

Auf der Hauptachse r_x des 3D-Sensors 10 befindet sich ein Arbeitsvolumen, in dem Detektionsfelder 32 liegen können, das von einer Deckenfläche in einem oberen Abstand h' und einer Bodenfläche in einem unteren Abstand h" abgegrenzt ist. Bekannt sind die Brennweite f und die Position (x_0, h_0) des 3D-Senors 10. Mit diesen Vorgaben werden die folgenden Schritte vollzogen:

1. Der äußerste Rand des Arbeitsvolumens auf der Deckenfläche bei der Höhe h' wird senkrecht auf die Bodenfläche bei der Höhe h" projiziert und ergibt dort einen Punkt (x', h").

2. Dieser Punkt (x', h") wird nun längs einer Geraden g, welche den Punkt (x', h") mit dem 3D-Sensor 10 verbindet, auf die Deckenfläche bei der Höhe h' zurückprojiziert.

3. Der dabei erhaltene Punkt der Deckenfläche wird erneut senkrecht auf die Bodenfläche hinunterprojiziert und ergibt dort einen Punkt (x", h").

4. Es ergibt sich ein Intervall [x", x'], dessen Länge durch die Anzahl verfügbarer Referenzkarten 40 geteilt wird, um die Mindestgröße von Detektionsfeldern 32 aufzufinden. Umgekehrt kann auf Basis des Intervalls [x', x"] bei einer vorgegebenen Mindestgröße der Detektionsfelder 32 die Anzahl erforderliche Referenzkarten angegeben werden.

Im Detail ergibt sich die folgende Rechnung: (x', h"), (x_0, h_0) sind aus den gegebenen Parametern bekannt. Für die Gerade g durch diese beiden Punkte werden dann die Geradenparameter über

$$\begin{pmatrix} a \\ b \end{pmatrix} = \frac{1}{(x'-x_0)} \begin{pmatrix} 1 & -1 \\ -x_0 & x' \end{pmatrix} \begin{pmatrix} h'' \\ h_0 \end{pmatrix}.$$

bestimmt. Daraus ergibt sich der Abszissenwert x" als

$$x'' = \frac{h'-b}{a}.$$

Damit ist das Intervall [x", x'] definiert. Beispielsweise folgt für die Vorgabe, dass vier Referenzkarten ausreichen müssen, eine Mindestgröße der Detektionsfelder 32, welche dem ca. 2,5-fachen des Auflösungsvermögens für Objekte entspricht. Möchte man also zum Beispiel mit dem 3D-Sensor 10 Objekte mit bis zu 70mm auflösen können, so müssen die Detektionsfelder 32 mindestens 168,5 mm groß sein und dürfen wie oben erläutert nicht euklidisch gestapelt werden, damit vier Referenzkarten 40 für jede denkbare Konfiguration von Detektionsfeldern 32 ausreichen.

**Patentansprüche**

1. Optoelektronischer 3D-Sensor (10) zum Erkennen von Objekten (42) innerhalb mindestens eines durch eine dreidimensionale geometrische Beschreibung virtuell vorgegebenen Detektionsfeldes (32), wobei der 3D-Sensor (10) einen 3D-Bildsensor (14a, 14b) zur Aufnahme einer pixelaufgelösten Tiefenkarte, eine Konfigurationseinheit (28) zum Festlegen von Feldgrenzen, welche das Detektionsfeld (32) vorgeben, sowie eine Objekterkennungseinheit (30) zum Auswerten der Tiefenkarte aufweist, um Objekteingriffe in das Detektionsfeld (32) zu erkennen, **dadurch gekennzeichnet,** **dass** die Konfigurationseinheit (30) dafür ausgebildet ist, aus den vorgegebenen Detektionsfeldern (32) mindestens eine pixelaufgelöste Referenztiefenkarte (40) zu erzeugen, in welcher die Feldgrenzen in die projektive Perspektive des 3D-Sensors (10) und somit in ein direkt mit der Tiefenkarte vergleichbares Format umgerechnet sind, und dass die Objekterkennungseinheit (30) dafür ausgebildet ist, eine Differenzkarte (44) als pixelweise Differenz von Tiefenkarte und Referenztiefenkarte (40) zu bilden und die Differenzkarte auszuwerten, um Objekteingriffe in das Detektionsfeld (32) zu erkennen.

2. 3D-Sensor (10) nach Anspruch 1,
wobei in Pixeln der Referenzkarte (40) jeweils der Abstand von dem 3D-Sensor (10) zu einer in der durch das jeweilige Pixel vorgegebenen Richtung befindlichen Feldgrenze eingetragen ist.

3. 3D-Sensor (10) nach Anspruch 2,
wobei bei mehreren in der gleichen Richtung hintereinander liegenden Feldgrenzen der Abstand der am weitesten entfernten Feldgrenze eingetragen ist.

4. 3D-Sensor (10) nach Anspruch 2 oder 3,
wobei die Konfigurationseinheit (28) dafür ausgebildet ist, zur Bestimmung des Abstands einen Strahl (g) in die durch das Pixel vorgegebenen Richtung zu verfolgen und dessen Schnittpunkt (Fg) mit aus den Feldgrenzen gebildeten Grenzflächen (F) des Detektionsfeldes (32) zu ermitteln.

5. 3D-Sensor (10) nach Anspruch 4,
wobei die Konfigurationseinheit (28) dafür ausgebildet ist, ein lineares Gleichungssystem für die Schnittpunktbestimmung des Strahls (g) mit der Ebene der Grenzfläche (F) zu lösen und den Abstand des Schnittpunkts (Fg) nur in die Referenzkarte (40) zu übernehmen, wenn einerseits der Schnittpunkt (Fg) innerhalb der Grenzfläche (F) liegt und andererseits für diese Richtung in der Referenzkarte (40) nicht bereits ein größerer Abstand eingetragen ist.

6. 3D-Sensor (10) nach einem der vorhergehenden Ansprüche,
wobei die Konfigurationseinheit (28) dafür ausgebildet ist, bei Vorgabe mehrerer Detektionsfelder (32) die Detektionsfelder (32) auf mehrere Referenzkarten (40) zu verteilen, um zu verhindern, dass innerhalb einer Referenzkarte (40) ein Detektionsfeld (32) aus Sicht des 3D-Sensors (10) im Schatten eines anderen Detektionsfeldes (32) liegt.

7. 3D-Sensor (10) nach Anspruch 6,
wobei die Konfigurationseinheit (28) dafür ausgebildet ist, für die Detektionsfelder (32) paarweise festzustellen, ob sie einander abschatten, um einen Graphen zu erzeugen, dessen Knoten die Detektionsfelder (32) sind, die genau dann durch Kanten verbunden sind, wenn sie einander abschatten, und das Färbungsproblem für den Graphen zu lösen, wobei die chromatische Zahl die Anzahl benötigter Referenzkarten (40) ist und die Färbung jedes Knotens das zugehörige Detektionsfeld (32) einer der Referenzkarten (40) zuordnet.

8. 3D-Sensor (10) nach Anspruch 6,
wobei die Konfigurationseinheit (28) dafür ausgebildet ist, die Detektionsfelder (32) in einer Reihenfolge anzuordnen, eine festgelegte oder offene Anzahl von leeren Referenzkarten (40) zur Verfügung zu stellen und die Detektionsfelder (32) nacheinander einer Referenzkarte (40) zuzuordnen, in der durch das zugeordnete Detektionsfeld (32) keine Abschattungen entsteht.

9. 3D-Sensor (10) nach einem der vorhergehenden Ansprüche,
wobei die Konfigurationseinheit (28) die Festlegung eines Detektionsfeldes (32) nur mit einer Mindestgröße zulässt und/oder nur dann zulässt, wenn sich zumindest die senkrechten Projektionen der Detektionsfelder nicht überschneiden.

10. 3D-Sensor (10) nach Anspruch 9,
wobei die Detektionsfelder (32) nur innerhalb eines Arbeitsvolumens festgelegt werden können, das zwischen einer Deckenebene in einem Mindestabstand und einer Bodenebene in einem Höchstabstand zu dem 3D-Sensor (10) liegt, und wobei die Mindestgröße und die Anzahl Referenzkarten (40) anhand eines Vergleichs ihres Produkts mit einer Referenzlänge ([x', x'']) vorgegeben ist, die sich wie folgt bestimmt:

- Projiziere als ersten Messpunkt (x') einen bei maximalem Sichtwinkel des 3D-Sensors (10) gelegenen Randpunkt der Deckenebene senkrecht auf die Bodenebene;
- Projiziere den ersten Messpunkt (x') auf einem Strahl zu dem 3D-Sensor (10) zurück auf die Deckenebene;
- Projiziere den neuerlich auf der Deckenebene erhaltenen Punkt als zweiten Messpunkt (x'') wieder senkrecht auf die Bodenebene; und
- Bestimme die Referenzlänge ([x', x'']) als Betragsdifferenz zwischen dem ersten Messpunkt (x') und dem zweiten Messpunkt (x'').

11. 3D-Sensor (10) nach Anspruch einem der vorhergehenden Ansprüche,
wobei die Objekterkennungseinheit (30) dafür ausgebildet ist, die Differenzkarte als Binärkarte (44) zu erzeugen, die in ihren Pixeln lediglich das Vorzeichen der Abstandswerte der Differenzkarte enthält.

12. 3D-Sensor (10) nach Anspruch einem der vorhergehenden Ansprüche,
wobei die Objekterkennungseinheit (30) dafür ausgebildet ist, nur Regionen der Differenzkarte (44) auf Objekteingriffe auszuwerten, wo das Vorzeichen ein Objekt (42) in oder vor einem Detektionsfeld (32) codiert.

**13.** 3D-Sensor (10) nach einem der vorhergehenden Ansprüche,
wobei ein sicherer Ausgang (38) vorgesehen ist, über welchen durch die Objekterkennungseinheit (30) ein sicherheitsgerichtetes Abschaltsignal an eine überwachte Gefahrenquelle (34) ausgebbar ist, sobald ein unzulässiger Objekteingriff in ein als Schutzfeld ausgebildetes Detektionsfeld (32) erkannt ist.

**14.** Verfahren zum Erkennen von Objekten (42) innerhalb mindestens eines durch eine dreidimensionale geometrische Beschreibung virtuell vorgegebenen Detektionsfeldes (32), bei dem eine pixel auf gelöste Tiefenkarte aufgenommen wird, Feldgrenzen festgelegt werden, welche das Detektionsfeld (32) vorgeben, und die Tiefenkarte ausgewertet wird, um Objekteingriffe in das Detektionsfeld (32) zu erkennen,
**dadurch gekennzeichnet,**
**dass** aus den vorgegebenen Detektionsfeldern (32) mindestens eine pixelaufgelöste Referenztiefenkarte (40) erzeugt wird, in welcher die Feldgrenzen in die projektive Perspektive des 3D-Sensors (10) und somit in ein direkt mit der Tiefenkarte vergleichbares Format umgerechnet werden, eine Differenzkarte (44) als pixelweise Differenz von Tiefenkarte und Referenztiefenkarte (40) gebildet und die Differenzkarte ausgewertet wird, um Objekteingriffe in das Detektionsfeld (32) zu erkennen.

**Claims**

**1.** An optoelectronic 3D sensor (10) for the detection of objects (42) within at least one detection field (32) virtually predefined by a three-dimensional geometric description, wherein the 3D sensor (10) comprises a 3D image sensor (14a, 14b) for capturing a pixel-resolved depth map, a configuration unit (28) for determining field boundaries defining the detection field (32), and an object detection unit (30 for evaluating the depth map in order to detect object intrusions into the detection field (32),
**characterized in that** the configuration unit (28) is configured to generate at least one pixel-resolved reference depth map (40) from the predefined detection fields (32), in which reference depth map (40) the field boundaries are converted into the projective perspective of the 3D sensor (10) and thus into a format directly comparable with the depth map, and **in that** the object detection unit (30) is configured to generate a difference map (44) as a pixel-wise difference of depth map and reference depth map (40) and to evaluate the difference map in order to detect object intrusions into the detection field (32).

**2.** The 3D sensor (10) according to claim 1,

wherein in pixels of the reference map (40) the respective distance of the 3D sensor (10) to a field boundary in a direction defined by the respective pixel is stored.

**3.** The 3D sensor (10) according to claim 2,
wherein in case of several field boundaries being arranged one after the other the distance of the farthest field boundary is stored.

**4.** The 3D sensor (10) according to claim 2 or 3,
wherein the configuration unit (28) is configured to trace a ray (g) in the direction defined by the pixel and to determine its intersection (Fg) with the boundary surfaces (F) of the detection field (32) defined by the field boundaries for determining the distance.

**5.** The 3D sensor (10) according to claim 4,
wherein the configuration unit (28) is configured to solve a linear equation system for the determination of the intersection of the ray (g) with the plane of the boundary surface (F) and to store the distance of the intersection point (Fg) in the reference map (40) only when on the one hand the intersection point (Fg) is positioned within the boundary surface (F) and on the other hand for that direction no larger distance has already been stored in the reference map (40).

**6.** The 3D sensor (10) according to any of the preceding claims,
wherein the configuration unit (28) is configured to distribute the detection fields (32) to a plurality of reference maps (40) when a plurality of detection fields (32) is predefined, in order to prevent that a detection field (32) is in the shadow of another detection field (32) from the perspective of the 3D sensor (10).

**7.** The 3D sensor (10) according to claim 6,
wherein the configuration unit (28) is configured for a pairwise test of detection fields (32) whether they shadow each other, in order to generate a graph whose vertices are the detection fields (32) which are connected by edges if and only if they shadow each other, and to solve the coloring problem for the graph, wherein the chromatic number is the number of required reference maps (40) and the coloring of each vertex assigns the corresponding detection field (32) to one of the reference maps (40).

**8.** The 3D sensor (10) according to claim 6,
wherein the configuration unit (28) is configured to arrange the detection fields (32) in a sequence, to provide a predetermined or free number of empty reference maps (40), and to assign the detection fields (32) one after the other to a reference map (40) where no shadowing is caused by the assigned detection field (32).

9. The 3D sensor (10) according to any of the preceding claims,
   wherein the configuration unit (28) accepts definition of a detection field (32) only with a minimum size and/or only when at least the orthogonal projections of the detection fields do not overlap.

10. The 3D sensor (10) according to claim 9,
    wherein the detection fields (32) can only be defined within a working volume positioned between a ceiling plane in a minimum distance and a bottom plane in a maximum distance from the 3D sensor (10), and wherein the minimum size and the number of reference maps (40) is preset based on a comparison of its product with a reference length ([x', x"]) determined as follows:

    - Project as a first measurement point (x') an edge point of the ceiling plane positioned at a maximum angle of sight of the 3D sensor (10) orthogonally onto the bottom plane;
    - Project the first measurement point (x') back onto the ceiling plane on a ray to the 3D sensor (10);
    - Project the new point obtained on the ceiling plane once again orthogonally onto the bottom plane as a second measurement point (x"); and
    - Determine the reference length ([x', x"]) as the absolute difference of the first measurement point (x') and the second measurement point (x").

11. The 3D sensor (10) according to any of the preceding claims,
    wherein the object detection unit (10) is configured to generate the difference map as a binary map (44) which stores merely the sign of the distance values of the difference map in its pixels.

12. The 3D sensor (10) according to any of the preceding claims,
    wherein the object detection unit (30) is configured to only evaluate regions of the difference map (44) for object intrusions where the sign codes for an object (42) in or in front of a detection field (32).

13. The 3D sensor (10) according to any of the preceding, claims,
    wherein a safe output (38) is provided via which a safety-related shutdown signal can be output to a monitored source of danger (34) from the object detection unit (30) once an inadmissible object intrusion into a detection field (32) configured as a protection field has been detected.

14. A method for the detection of objects (42) within at least one detection field (32) virtually predefined by a three-dimensional geometric description, wherein a pixel-resolved depth map is captured, field boundaries defining the detection field (32) are determined, and the depth map is evaluated in order to detect object intrusions into the detection field (32), **characterized in that** at least one pixel-resolved reference depth map (40) is generated from the predefined detection fields (32), in which reference depth map (40) the field boundaries are converted into the projective perspective of the 3D sensor (10) and thus into a format directly comparable with the depth map, a difference map (44) is generated as a pixel-wise difference of depth map and reference depth map (40), and the difference map is evaluated in order to detect object intrusions into the detection field (32).

## Revendications

1. Capteur optoélectronique 3D (10) pour reconnaître des objets (42) à l'intérieur d'au moins un champ de détection (32) imposé virtuellement par une description géométrique tridimensionnelle, ledit capteur 3D (10) comprenant un capteur d'image 3D (14a, 14b) pour enregistrer une carte de profondeur à résolution de l'ordre du pixel, une unité de configuration (28) pour fixer des limites de champ qui imposent le champ de détection (32), ainsi qu'une unité de reconnaissance d'objets (30) pour analyser la carte de profondeur afin de reconnaître des interventions d'objets dans le champ de détection (32),
   **caractérisé en ce que**
   l'unité de configuration (30) est réalisée pour engendrer à partir des champs de détection imposés (32) au moins une carte de profondeur de référence (40) à résolution de l'ordre du pixel, dans laquelle les limites de champ sont converties dans la perspective de projection du capteur 3D (10) et ainsi dans un format directement comparable à la carte de profondeur, et **en ce que** l'unité de reconnaissance d'objets (30) est réalisée pour former une carte de différence (44) sous forme de différence pixel par pixel de la carte de profondeur et de la carte de profondeur de référence (40) et pour analyser la carte de différence afin de reconnaître des interventions d'objets dans le champ de détection (32).

2. Capteur 3D (10) selon la revendication 1,
   dans lequel la distance depuis le capteur 3D (10) jusqu'à une limite de champ qui se trouve dans la direction imposée par le pixel respectif est inscrite respectivement dans les pixels de la carte de référence (40).

3. Capteur 3D (10) selon la revendication 2,
   dans lequel, dans le cas où il existe plusieurs limites de champ situées les unes derrière les autres dans la même direction, c'est la distance de la limite de champ la plus éloignée qui est inscrite.

**4.** Capteur 3D (10) selon la revendication 2 ou 3, dans lequel l'unité de configuration (28) est réalisée, pour la détermination de la distance, pour poursuivre un rayon (g) dans la direction imposée par le pixel, et pour déterminer son point d'intersection (Fg) avec des surfaces limites (F) du champ de détection (32), formées à partir des limites de champ.

**5.** Capteur 3D (10) selon la revendication 4, dans lequel l'unité de configuration (28) est réalisée pour résoudre un système d'équations linéaires pour la détermination du point d'intersection du rayon (g) avec le plan de la surface limite (F), et pour reprendre la distance du point d'intersection (Fg) dans la carte de référence (40) uniquement si d'une part le point d'intersection (Fg) se trouve à l'intérieur de la surface limite (F) et si d'autre part une plus grande distance n'est pas déjà inscrite pour cette direction dans la carte de référence (40).

**6.** Capteur 3D (10) selon l'une des revendications précédentes, dans lequel l'unité de configuration (28) est réalisée, dans le cas ou plusieurs champs de détection (32) sont imposés, pour répartir les champs de détection (32) sur plusieurs cartes de référence (40) afin d'empêcher qu'à l'intérieur d'une carte de référence (40) un champ de détection (32) se trouve, du point de vue du capteur 3D (10), dans l'ombre d'un autre champ de détection (32).

**7.** Capteur 3D (10) selon la revendication 6, dans lequel l'unité de configuration (28) est réalisée afin de constater pour les champs de détection (32) paire par paire s'ils se masquent mutuellement, et engendrer un graphique dont les noeuds sont les champs de détection (32) qui sont alors reliés exactement par des arêtes s'ils se masquent mutuellement et afin de résoudre le problème de coloration pour le graphique, de sorte que le nombre chromatique et le nombre de cartes de référence nécessaires (40) et la coloration de chaque noeud associe le champ de détection associé (32) à l'une des cartes de référence (40).

**8.** Capteur 3D (10) selon la revendication 6, dans lequel l'unité de configuration (28) est réalisée pour agencer les champs de détection (32) dans une succession, pour mettre à disposition un nombre fixe ou un nombre ouvert de cartes de référence vides (40), et pour associer les champs de détection (32) les uns après les autres à une carte de référence (40) dans laquelle il ne se produit aucun masquage par le champ de détection (32) associé.

**9.** Capteur 3D (10) selon l'une des revendications précédentes, dans lequel l'unité de configuration (28) autorise la détermination d'un champ de détection (32) uniquement avec une taille minimum et/ou l'autorise uniquement si au moins les projections perpendiculaires des champs de détection ne se recoupent pas.

**10.** Capteur 3D (10) selon la revendication 9, dans lequel les champs de détection (32) ne peuvent être fixés qu'à l'intérieur d'un volume de travail qui est situé entre un plan de plafond à une distance minimum et un plan de plancher à une distance maximum du capteur 3D (10), et dans lequel la taille minimum et le nombre de cartes de référence (40) sont imposés au moyen d'une comparaison de leur produit avec une longueur de référence ([x', x'']), qui est déterminée comme suit :

> - on projette à titre de premier point de mesure (x') un point de bordure du plan de plafond, situé sous un angle de vision maximum du capteur 3D (10), perpendiculairement sur le plan de plancher ;
> - on projette le premier point de mesure (x') sur un rayon vers le capteur 3D (10) en retour vers le plan de plafond ;
> - on projette le point nouvellement obtenu sur le plan de plafond à titre de second point de mesure (x'') à nouveau perpendiculairement sur le plan de plancher ; et
> - on détermine la longueur de référence ([x', x'']) à titre de différence de valeur entre le premier point de mesure (x') et le second point de mesure (x'').

**11.** Capteur 3D (10) selon l'une des revendications précédentes, dans lequel l'unité de reconnaissance d'objets (30) est réalisée pour engendrer la carte de différence sous forme de carte binaire (44) qui contient dans ses pixels uniquement le signe des valeurs de distance de la carte de différence.

**12.** Capteur 3D (10) selon l'une des revendications précédentes, dans lequel l'unité de reconnaissance d'objets (30) est réalisée pour analyser vis-à-vis d'interventions d'objets uniquement des régions de la carte de différence (44) où le signe code un objet (42) dans ou devant un champ de détection (32).

**13.** Capteur 3D (10) selon l'une des revendications précédentes, dans lequel il est prévu une sortie de sécurité (38) via laquelle un signal de coupure à vocation de sécurité peut être envoyé par l'unité de reconnaissance d'objets (30) à une source de danger surveillée (34) dès qu'une intervention d'objet inadmissible est reconnue dans un champ de détection (32) réalisé à titre de champ de protection.

**14.** Procédé pour reconnaître des objets (42) à l'intérieur d'au moins un champ de détection (32) imposé virtuellement par une description géométrique tridimensionnelle, dans lequel on enregistre une carte de profondeur à résolution de l'ordre du pixel, on fixe des limites de champ qui imposent le champ de détection (32) et on analyse la carte de profondeur afin de reconnaître des interventions d'objets dans le champ de détection (32),

**caractérisé en ce que**

on engendre à partir des champs de détection imposés (32) au moins une carte de profondeur de référence (40) à résolution de l'ordre du pixel, dans laquelle les limites de champ sont converties dans la perspective en projection du capteur 3D (10) et ainsi dans un format directement comparable à la carte de profondeur, on forme une carte de différence (44) sous forme de différence pixel par pixel de la carte de profondeur et de la carte de profondeur de référence (40), et on analyse la carte de différence afin de reconnaître des interventions d'objets dans le champ de détection (32).

Figur 1

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2053538 A1
- EP 2023160 B1
- EP 2048557 B1
- EP 2017571 A1
- DE 102005063217 A1

- EP 2275990 B1
- US 20110044502 A1
- WO 2007020666 A1
- EP 2439487 A1
- EP 1482328 A2